# EUROPEAN PATENT APPLICATION

(11) **EP 3 816 920 A1**
(43) Date of publication of application: **05.05.2021**
(21) Application number: 20202850.2
(22) Date of filing: 20.10.2020
(51) Int. Cl.: G06Q 30/06

(54) **METHOD OF OBTAINING AND PROCESSING TIRE INFORMATION**

(30) Priority: 31.10.2019 US 201962928569 P; 12.08.2020 US 202016991371
(71) Applicant: The Goodyear Tire & Rubber Company, Akron, OH 44316 (US)
(72) Inventor: DO VALE CIOSSANI, Rodrigo, Macedonia, Ohio 44056 (US); GANGULY, Abhijit, Hudson, Ohio 44236 (US); CLARK, Wesley Conyers, Stow, Ohio 44224 (US); SLAGE, Thomas Andrew, Youngstown, Ohio 44515 (US)
(74) Representative: Goodyear IP Law

(57) **Abstract**

A method of obtaining and processing tire information (22) is disclosed. The method includes the steps of: providing a web site (34) stored on a web server (54), the web site (34) being accessible from a computing device (32); displaying on the web site (34) a web page (38) for a consumer including: instructions for locating, on a vehicle (14) on which tires (12) are to be mounted, a placard (16) containing tire information (22); a request to take a photo (64) of the placard (16); and a request to upload the photo (64) of the placard (16) to the web site (34); upon the consumer locating the placard (16), taking the photo of the placard and uploading the placard to the web site (34), storing the photo (64) on the web server (54); providing an optical character recognition program (74) in communication with the web server (54); analyzing the photo (64) with the optical character recognition program (74); identifying characters (76) in the photo (64) corresponding to tire size information (26) on the placard (16); correlating the identified tire size information (26), in a database (58) in communication with the web server (54), with a listing of pre-stored tire information, thereby verifying whether the identified tire size information (26) is appropriate for the vehicle (12); and returning a message to the web site (38) from the web server (54) including results of the identification and correlation.

## Description

### Field of the Invention

The invention relates to a method of obtaining and processing tire information to thereby assist a person or a consumer in purchasing tires. More particularly, the invention is directed to a method that includes optical character recognition of tire information on a vehicle placard, which enables easy and convenient identification and purchasing of correctly sized tires by a consumer through an online system.

### Background of the Invention

Conventional pneumatic tires are designed to perform for relatively long periods of time. Nevertheless, such tires are each formed with a ground-engaging tread that necessarily wears down over the life of the tire. When the tread wears down to a certain level, replacement of the tire is recommended.

In addition, pneumatic tires are subject to air pressure losses due to puncture by nails and other sharp objects, temperature changes, and/or diffusion of air through the tire itself. Such air pressure losses or damage to a tire may lead to a need to replace the tire.

Traditionally, when a consumer has needed to replace one or more tires, the consumer has had to visit a physical tire store that includes a commercial garage with a storefront. Such tire stores are typically inconvenient for a consumer to visit.

In addition, in a physical tire store, the consumer must typically go to a technician or cashier, who confirms if a selected tire fits a specific vehicle, checks inventory availability of the tire, and/or verifies the price of the tire. This can be a time-consuming process, particularly when multiple consumers are attempting to review and/or purchase tires at the same time.

More recently, as an alternative, tires have been able to be purchased through the Internet, where consumers can visit certain online tire-related web sites. Upon visiting such a web site, the consumer is able to select tires based on a tire image and a written description and may perform an online purchase of the tires.

However, tires are manufactured in specific sizes, and many tire models or types are available only in certain sizes. To ensure that a selected tire for purchase online is the correct size, the consumer must enter tire size information. Tire size information may be confusing to some consumers resulting in the information being entered incorrectly. When this occurs, tires having the wrong size may be purchased, resulting in the need to return the tires and purchase different ones, which is often inconvenient and frustrating for a consumer.

As a result, there is a need in the art for a method that enables correct tire size information to be entered into an online system thereby enabling easy and convenient purchasing of correctly sized tires by a consumer.

### Summary of the Invention

The invention relates to a method in accordance with claim 1.

Dependent claims refer to preferred embodiments of the invention.

According to a preferred aspect of an exemplary embodiment of the invention, a method of purchasing tires includes the steps of providing a web site stored on a web server in which the web site is accessible from a computing device. A web page for a consumer is displayed on the web site and includes instructions for locating, on a vehicle on which tires are to be mounted, a placard containing tire information, a request to take a photo of the placard, and a request to upload the photo of the placard to the web site. Upon the consumer locating the placard, taking the photo of the placard and uploading the placard to the web site, the photo is stored on the web server. An optical character recognition program that is in communication with the web server is provided, and the photo is analyzed with the optical character recognition program. Characters are identified in the photo corresponding to tire size information on the placard. The identified tire size information is correlated, in a database in communication with the web server, with a listing of pre-stored tire information thereby verifying whether the identified tire size information is appropriate for the vehicle. A message is returned to the web site from the web server including results of the identification and correlation.

### Brief Description of the Drawings

The invention will be described by way of example and with reference to the accompanying drawings, in which:
Figure 1 is a side elevational view of an exemplary vehicle equipped with tires;
Figure 2 is a perspective view of a portion of the vehicle shown in Figure 1, showing a vehicle placard;
Figure 3 is a schematic representation of the vehicle placard shown in Figure 2;
Figure 4 is a schematic representation of a first display screen of an online system employing an exemplary embodiment of the method of the present invention;
Figure 5 is a schematic representation of a second display screen of an online system employing an exemplary embodiment of the method of the present invention;
Figure 6 is a schematic representation of a third display screen of an online system employing an exemplary embodiment of the method of the present invention;
Figure 7 is a schematic representation of a fourth display screen of an online system employing an exemplary embodiment of the method of the present invention;
Figure 8 is a schematic representation of a fifth display screen of an online system employing an exemplary embodiment of the method of the present invention;
Figure 9 is a schematic representation of the fifth display screen showing additional aspects of the method of the present invention;
Figure 10 is a schematic representation of the fifth display screen showing further aspects of the method of the present invention;
Figure 11 is a flow diagram showing steps of an exemplary embodiment of the method of the present invention; and
Figure 12 is a schematic representation of a computing structure employed in the method of the present invention.

Similar numerals refer to similar parts throughout the drawings.

### Detailed Description of Example Embodiments of the Invention

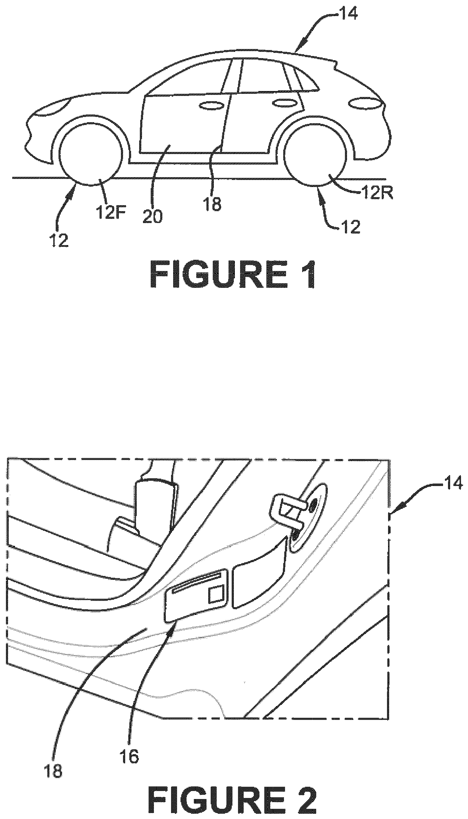

An exemplary embodiment of the method of the present invention is indicated generally at 10 in Figures 1 through 12, with steps and associated structure to be described in greater detail below.

Referring to Figures 1 through 3, multiple tires 12 are mounted on a vehicle 14 as known in the art. The tires 12 are specifically sized for the vehicle 14, and when replacing the tires, specific size information for the tires is needed. However, as mentioned above, many consumers do not know the correct size information for the tires 12.

While tire size information is molded or printed on the tires 12, it can be difficult to read this information directly from the tires. Alternatively, size and other information for the tires 12 is contained on a placard 16. The placard 16 may be referred to in the art as a door placard, vehicle placard, tire information sticker, or the like. For the purpose of convenience, reference herein shall be made to a placard 16, with the understanding that such reference includes all such placards and stickers.

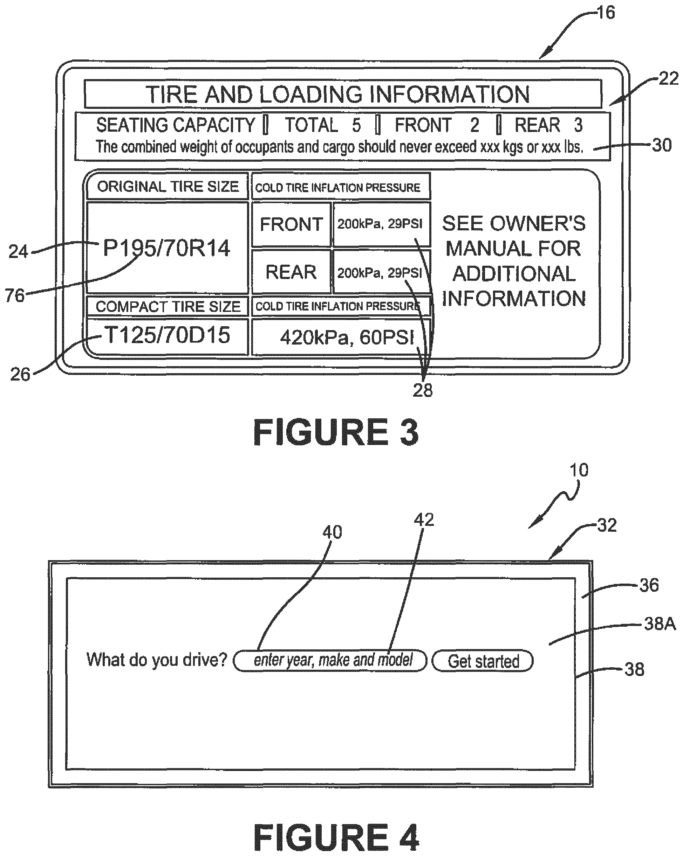

The placard 16 is often mounted on a pillar 18 inside a driver door 20 of the vehicle 14. When the driver door 20 is open, the placard 16 is visible to a consumer. As shown in Figure 3, the placard 16 includes tire information 22.

The tire information 22 includes size information 24 for the vehicle tires 12. In the exemplary placard 16 shown in Figure 3, the size information 24 for the tires 12 is indicated as "P195/70R14." The "P" indicates that each tire 12 is a passenger tire, and the "195" is the width of each tire in millimeters. The "70" is a ratio of section height of each tire 12 to the tire width, which is known as the aspect ratio of the tire. The "R" indicates that each tire 12 is a tire of radial construction, and the "14" is the diameter, in inches, of the wheel on which each respective tire is mounted. This size information 24 enables properly sized replacement tires 12 to be selected for the vehicle 14.

If the vehicle 14 is equipped with front tires, indicated by 12F in Figure 1, which are different in size from rear tires, indicated by 12R, the placard 16 lists appropriate size information 24 for the respective front and rear tires. For the exemplary placard 16 shown in Figure 3, the front tires 12F and rear tires 12R are the same size. The placard 16 may also include size information 26 for a spare or compact tire, recommended inflation pressures 28 for the tires 12, and seating or loading capacity 30 for the vehicle 14. Additional information on the placard may include a speed rating for the tires 12 and/or a vehicle identification number (VIN) of the vehicle 14.

Many consumers may not be aware of the information on the placard 16, or due to the variety of information 22 contained on the placard, may not be aware which information is the correct tire size information 24. The method 10 of the present invention enables correct tire size information 24 to be easily entered into an online system by a consumer for convenient purchasing of correctly sized tires 12, as will now be described.

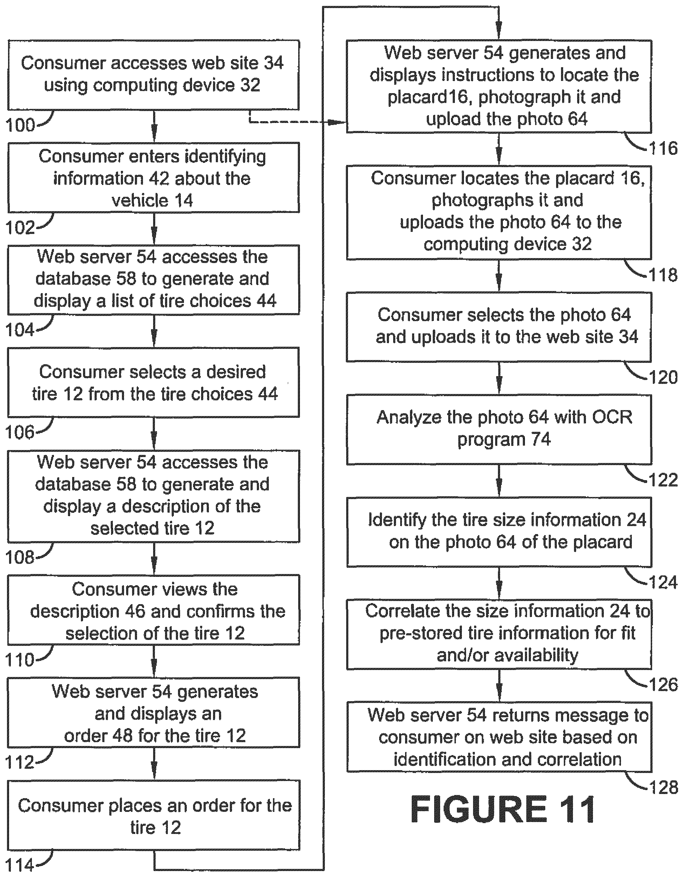

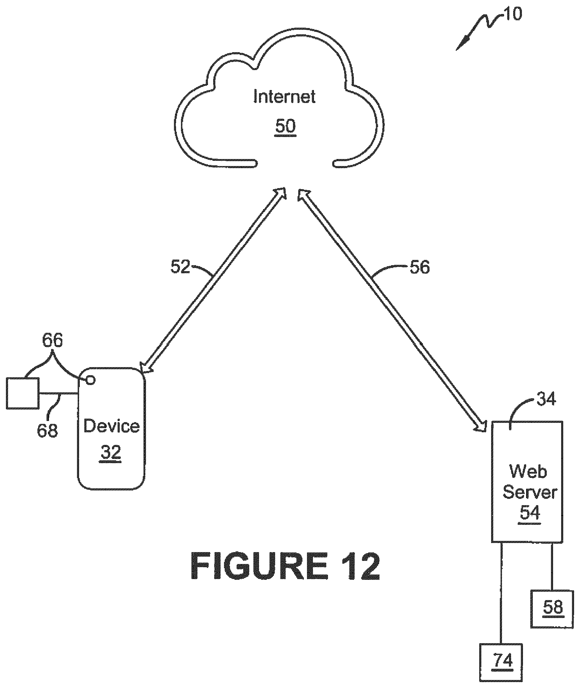

Exemplary steps of the method 10 are shown in Figure 11 and employ a computing structure as shown in Figure 12. With particular reference to Figure 12, a computing device 32 is operatively connected to a web site 34. More particularly, the computing device 32 is connected to the Internet 50 through a wired or wireless connection 52. A web server 54 is also connected to the Internet 50 through a wired or wireless connection 56 and stores the web site 34. The computing device 32 thus connects to and communicates with the web server 54 and the web site 34 using the Internet 50 through connections 52 and 56. Exemplary computing devices 32 include a desktop computer, a laptop computer and a portable device, such as a cellular phone and/or a tablet computer.

With reference now to Figures 4, 11 and 12, the computing device 32 includes a display screen 36. The web site 34 includes individual web pages 38, which are visible to a consumer on the display screen 36. In the method 10, the consumer accesses the web site 34 using the computing device 32, step 100. The web site 34 contains information about tires, including descriptive information and purchasing information, which is communicated to the consumer through the web pages 38.

It is to be understood that steps 102 through 114, as will be described in detail below, are optional steps of the method 10. As a result, the steps of the method 10 may progress from step 100 directly to steps 116 through 128, which will also be described in greater detail below, without affecting the overall concept or operation of the invention.

Optionally, a first web page 38A displays an interactive field 40 in which the consumer may enter identifying information 42 about the vehicle 14, step 102. Such vehicle information 42 may include the vehicle year, the manufacturer or make, and the vehicle model. Alternatively, the vehicle information 42 may include the license plate number of the vehicle 14 or the vehicle identification number.

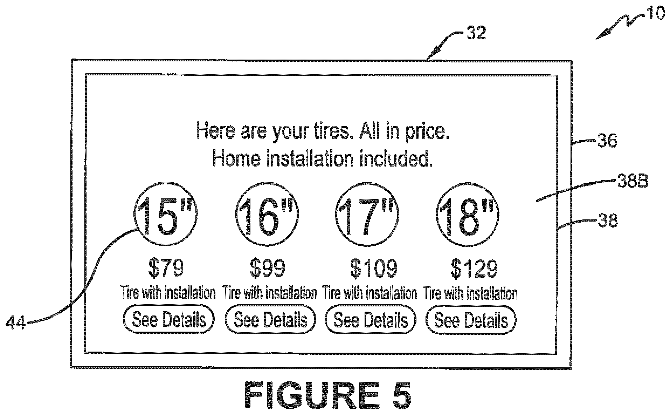

Referring to Figures 5, 11 and 12, optionally, once the consumer enters the identifying information 42, the web server 54 accesses a database 58 to generate and display a list of multiple tire choices 44 on a second web page 38B, step 104. Optionally, the consumer views the tire choices 44 and selects a desired tire 12, step 106.

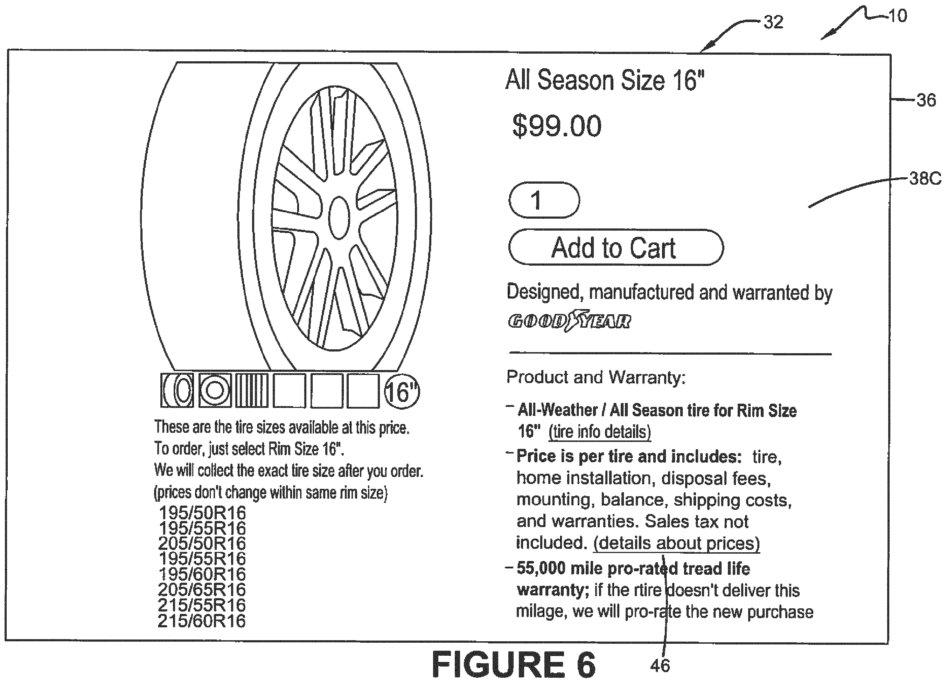

Turning to Figures 6, 11 and 12, optionally, the web server 54 again accesses the database 58 to generate and display a third web page 38C which displays a description 46 to the consumer of the selected tire 12, step 108. For example, the description 46 may include an image of the tire 12, general information about the tire, ratings, reviews, recommended tire use, tread life warranty, and/or manufacturer specifications. Optionally, the consumer views the description 46 and may confirm the selection of the tire 12, step 110.

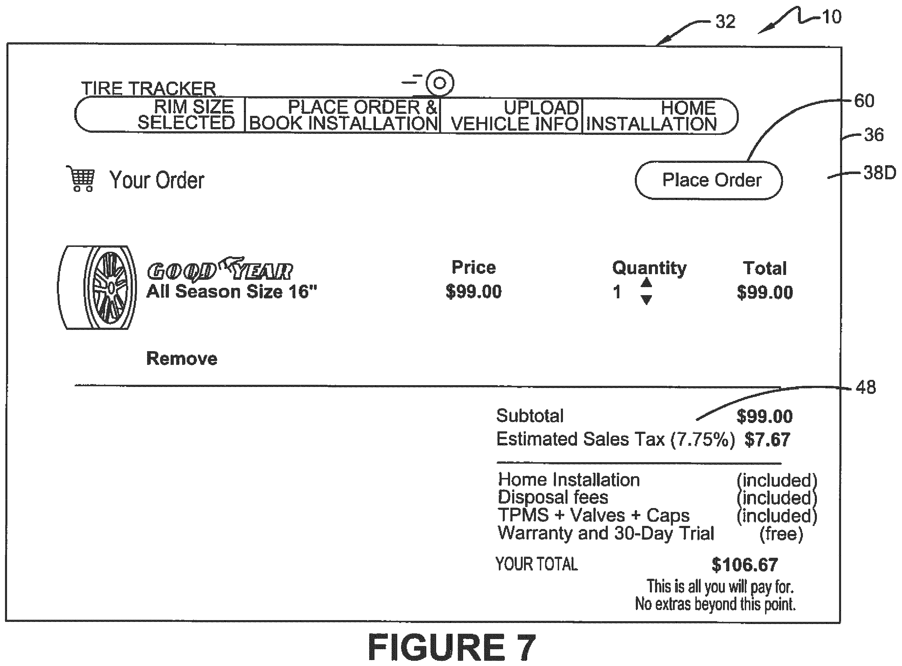

As shown in Figures 7, 11 and 12, optionally, once the consumer confirms the selection of the tire 12, the web server 54 generates and displays a fourth web page 38D, which displays an order 48 for the tire 12, step 112. Optionally, the consumer may then select an interactive button 60 to place an order for the tire 12, step 114.

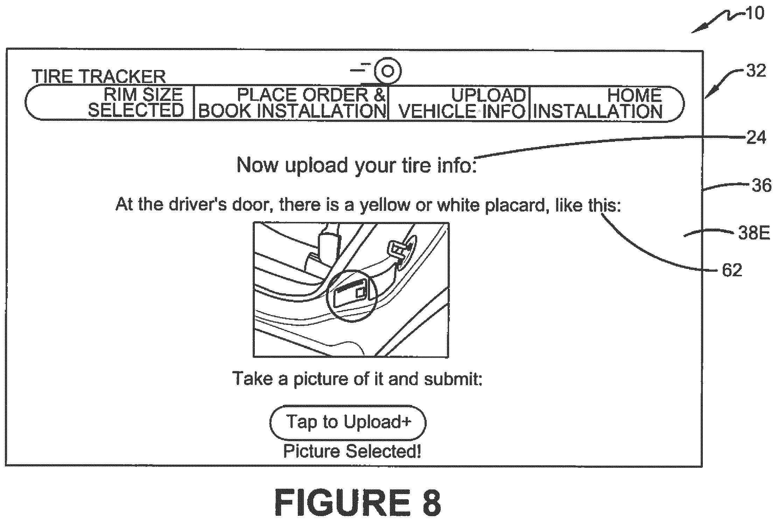

With reference now to Figures 8, 11 and 12, when steps 102 through 114 are employed, once the interactive button 60 to order the tire 12 has been selected, the web server 54 generates and displays a fifth web page 38E, step 116. Alternatively, the web server 54 may generate and display the web page 38E in step 116 immediately after step 100, without executing steps 102 through 114. The fifth web page 38E includes instructions 62 to show the consumer where the placard 16 is located on the vehicle 14, a request for the consumer to take a photo or photograph of the placard, and a request for the consumer to upload the photo to the web site 34.

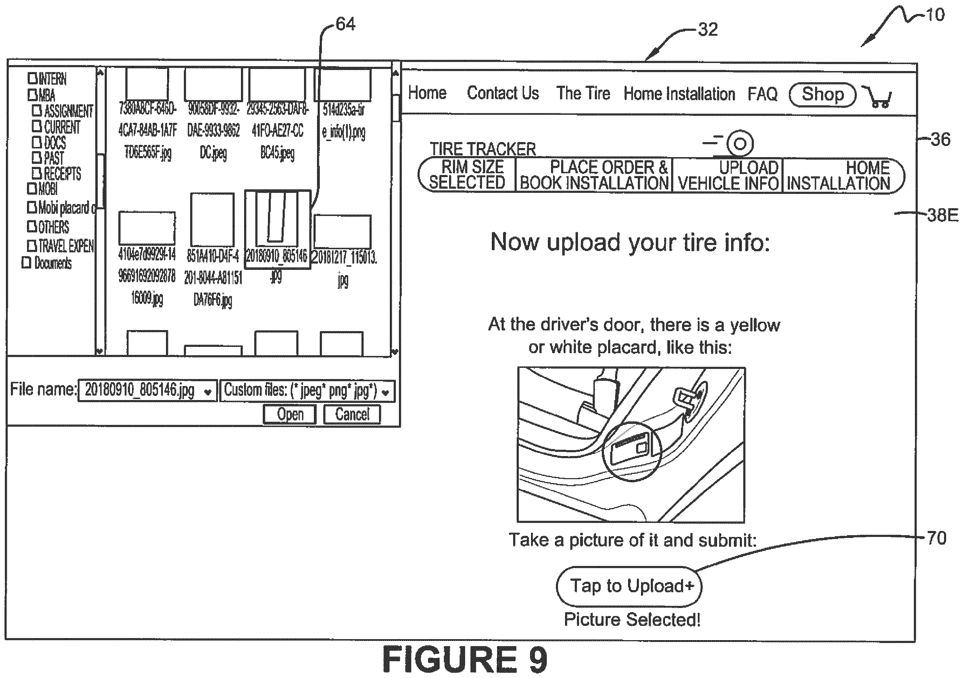

As shown in Figures 9, 11 and 12, following the instructions 62, the consumer locates the placard 16 and takes a photo 64 of it using a digital camera 66, step 118. The digital camera 66 may be integrated into the computing device 32 when it is a portable device, so that a separate upload operation of the photo 64 to the computing device is not necessary. Alternatively, the digital camera 66 may be a separate device that connects to the computing device 32 through a wired or wireless connection 68. In this circumstance, step 118 also includes uploading of the photo 64 from the digital camera 66 to the computing device 32.

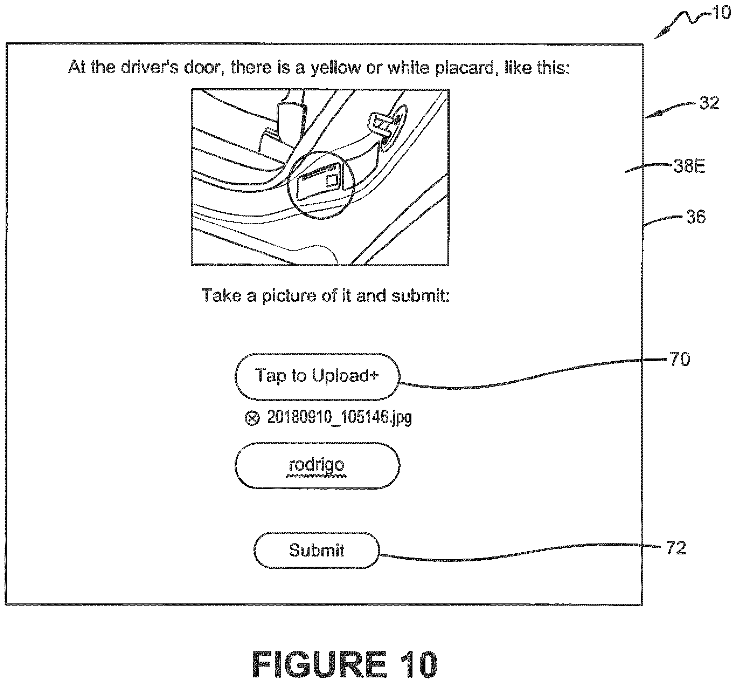

With additional reference to Figure 10, the consumer selects the photo 64 for uploading to the web site 34 and thus the web server 54, step 120, preferably using an interactive "upload" button 70 and an interactive "submit" button 72. Once the photo 64 is uploaded to the web site 34 and the web server 54, the photo is stored on the web server.

Referring now to Figures 11 and 12, an optical character recognition (OCR) program 74 is in electronic communication with the web server 54. For example, the OCR program 74 may be stored on the web server 54 or may be stored separately from the web server and electronically accessed by the web server. The photo 64 is analyzed by the OCR program 74 and characters 76 on the placard 16 are recognized in the photo, step 122. The tire size information 24 (Figure 3) on the placard 16 is identified by electronically comparing the recognized characters on the photo 64 to a listing of characters stored in the database 58 for a match or correlation, step 124. Alternatively, in step 124, the characters that are recognized by the OCR program 74 may be visually reviewed by a technician and compared to a listing of characters that may be stored in the database 58 or elsewhere.

The identified tire size information 24 is then correlated in the database 58 to a listing of pre-stored tire information, step 126. This correlation ensures that the identified tire size information 24 matches or fits the vehicle 14 identified by the consumer, and thus is appropriate for the vehicle. The correlation also ensures that the identified tire size information 24 matches tires 12 that are available or in stock for purchase.

The web server 54 then returns a message to the consumer on the web site 34 with the results of the identification and correlation, step 128. For example, when the identification and correlation of the tire size information 24 corresponds to tires 12 that match the requirements of the vehicle 14 and are available for purchase, the web site 34 returns a message to the consumer that the tires are available and the order may be completed. Upon completion of the online purchase of the selected tires 12, the web site 34 may optionally enable the customer to schedule a date, time and location for installation of the tires.

When the identification and correlation of the tire size information 24 does not correspond to tires 12 that match the requirements of the vehicle 14, or does not correspond to tires that are available for purchase, the web site 34 returns a message to the consumer that the tires are not appropriate for the vehicle 14 or are not available for purchase. In such a case, the web server 54 may retrieve from the database 58 information for an alternate selection of tires 12 that are appropriate for the vehicle 14 and/or are available for purchase, and send an additional message to the consumer on the web site 34 suggesting such appropriate and/or available tires.

It is to be understood that the above-described steps of the method 10 may be altered or rearranged, or steps omitted or added, without affecting the overall concept or operation of the invention. For example, as described above, optional steps 116 through 128 may be performed before or in place of steps 102 through 114. In such a case, the photo 64 of the placard 16 is uploaded to the web server 54 after step 100, and before other information is input by the consumer. Such an order of steps 116 through 128 may narrow the selection of tires 12 that are displayed to only those which match the tire size information 24 on the placard and are available for purchase.

In addition, in steps 122, 124 and 126, information on the photo 64 of the placard 16 in addition to, or other than, the tire size information 24 may be employed. For example, the inflation information 28, capacity information 30, speed rating and/or vehicle identification number may be identified and correlated in the database 58 to a listing of pre-stored information to confirm that the tire size information 24 is correct, or may be employed in place of the tire size information if the OCR recognition of the tire size information is not successful.

In this manner, the method 10 of the present invention enables correct tire size information 24 to be electronically identified during the purchase of tires 12 on a web site 24 by a consumer, thereby enabling easy and convenient purchasing of correctly sized tires. The method 10 increases certainty through the consumer-interface web pages 38, thereby enabling consumers to correctly order tires 12 that are of an appropriate size for their vehicle 14.

## Claims

1. A method of obtaining and processing tire information, the method including the steps of:
providing a web site (34) stored on a web server (54), the web site (34) being accessible from a computing device (32);
displaying on the web site (34) a web page (38) for a consumer including:
instructions for locating, on a vehicle (14) on which tires (12) are to be mounted, a placard (16) containing tire information (22);
a request to take a photo (64) of the placard (16); and
a request to upload the photo (64) of the placard (16) to the web site (34);
upon the consumer locating the placard (16), taking the photo of the placard and uploading the placard to the web site (34), storing the photo (64) on the web server (54);
providing an optical character recognition program (74) in communication with the web server (54);
analyzing the photo (64) with the optical character recognition program (74);
identifying characters (76) in the photo (64) corresponding to tire size information (26) on the placard (16);
correlating the identified tire size information (26), in a database (58) in communication with the web server (54), with a listing of pre-stored tire information, thereby verifying whether the identified tire size information (26) is appropriate for the vehicle (12); and
returning a message to the web site (38) from the web server (54) including results of the identification and correlation.

2. The method of claim 1, further comprising, in the step of correlating the identified tire size information (26), verifying that the identified tire size information matches tires (12) that are available for purchase.

3. The method of purchasing tires of claim 1 or 2, wherein in the step of identifying characters (76) in the photo (64) corresponding to tire size information (24) on the placard (16), the tire size information (24) is identified by electronically comparing the recognized characters (76) to a listing of characters stored in the database (58).

4. The method of at least one of the previous claims, wherein in the step of identifying characters (76) in the photo (64) corresponding to tire size information (24) on the placard (16), the tire size information (24) is identified by visually comparing the recognized characters to a listing of characters.

5. The method of at least one of the previous claims, wherein the step of returning a message to the web site (34) from the web server (54) with results of the identification and correlation includes a message that an order for purchase of the tires (12) may be completed and/or includes a message including information for an alternate selection of tires (12) that are appropriate for the vehicle (14) and are available for purchase.

6. The method of at least one of the previous claims, further comprising the step of displaying on the web site (34) an interactive field (60) for entry of identifying information for the vehicle (14), the identifying information for the vehicle (14) preferably including at least one of a vehicle year, a manufacturer, a vehicle model, a license plate number of the vehicle, and a vehicle identification number.

7. The method of at least one of the previous claims, further comprising the steps of, upon entry of the identifying information about the vehicle (14):
accessing the database (58) to generate a list of tire choices from the database; and
displaying the list of tire choices on the web site (34), and, optionally,
upon consumer selection of a tire (12) from the list of tire choices on the web site (34), displaying a description of the selected tire (12) on the web site (34), the description preferably including at least one of an image of the selected tire, general information about the selected tire, ratings for the selected tire, reviews of the selected tire, recommended use of the selected tire, tread life warranty of the selected tire, and manufacturer specifications of the selected tire.

8. The method of at least one of the previous claims, further comprising the step of, upon confirmation of the selection of the selected tire (12) on the web site (34), displaying an order (48).

9. The method of at least one of the previous claims, further comprising the steps of:
recognizing characters (76) in the photo (64) corresponding to additional tire information on the placard (16) and/or confirming the tire size information (24) from the recognized characters (76).

10. The method of at least one of the previous claims, wherein the additional tire information includes at least one of inflation information, capacity information, speed rating and a vehicle identification number.

11. The method of at least one of the previous claims, wherein the computing device (32) is a desktop computer or a laptop computer.

12. The method of at least one of the previous claims, wherein the computing device (32) is a portable device, which includes at least one of a mobile phone and a tablet computer.

13. The method of at least one of the previous claims, wherein said method of obtaining and processing tire information is part of a method of assisting a person or a consumer in purchasing one or more tires (12) for the vehicle (14).
